# EUROPÄISCHE PATENTSCHRIFT

(11) **EP 0 322 544 B1**
(45) Veröffentlichungstag und Bekanntmachung des Hinweises auf die Patenterteilung: **20.01.1993**
(21) Anmeldenummer: 88118708.2
(22) Anmeldetag: 10.11.1988
(51) Int. Cl.: C02F 1/48

(54) **Vorrichtung zum Magnetisieren von Trinkwasser**
Drinking-water magnetizing device
Dispositif pour magnétiser l'eau potable

(30) Priorität: 29.12.1987 CH 5096/87
(43) Veröffentlichungstag der Anmeldung: 05.07.1989
(73) Patentinhaber: Emil Schaerer & Co., CH-8700 Küsnacht (CH)
(72) Erfinder: Schaerer, Emil A., CH-8700 Küsnacht (CH)
(74) Vertreter: Petschner, Goetz

(56) Entgegenhaltungen:
- EP-A- 0 295 463
- DE-C- 455 985
- DE-U- 8 514 037
- FR-A- 2 290 221

## Beschreibung

Die vorliegende Erfindung betrifft einen Trinkbecher.

Aus der Biophysik ist es bekannt, dass Quellwasser unter der Wirkung des Erdmagnetismus vergleichsweise dem üblichen Leitungswasser der öffentlichen Trinkwasserversorgung, wo die Metall-Leitungen die magnetische Kraft des Wassers zerstören, eine wesentlich geringere Oberflächenspannung aufweist, also empfindungsgemäss "dünnflüssiger" erscheint, da hier die einzelnen Moleküle nicht, wie beim Leitungswasser, stark miteinander verkettet sind, sondern sich freibeweglicher verhalten. Im wesentlichen durch diese physikalischen Eigenschaften ist das Quellwasser vergleichsweise dem Leitungswasser bekanntermassen bekömmlicher, von vorzüglicher Geschmacksqualität und insbesondere von wesentlich grösserer therapeutischer Wirkung (Dr. Bansal: "Mit Magnetismus heilen; Die Heilkraft magnetisierten Wassers").

Der Biomagnetik sind nun die Erkenntnisse zu verdanken, dass Leitungswasser, das magnetischen Kraftfeldern ausgesetzt wird, ähnliche Eigenschaften wie das Quellwasser annimmt. Taucht man beispielsweise einen Magneten von etwa 1000 Gauss (0,1 T) in ein Glas Wasser oder hält diesen an dessen Wandung, so fällt in etwa 3 - 5 Minuten die Oberflächenspannung des Wassers von etwa 73 mN/m (dyn/cm) auf etwa 60 mN/m oder um ca. 18 %, wie einfache Messungen nachweisen (Dr. sc.tech.ETH Walter O. Stark: "Magnetismus in der Therapie").

Es ist nun Aufgabe der vorliegenden Erfindung, einen Trinkbecher zu schaffen, welcher geeignet ist, Leitungswasser auf einfache, für jedermann handliche und insbesondere hygienisch einwandfreie Art in der vorstehenden Weise aufzubereiten.

Dies wird erfindungsgemäss erreicht durch ein aufsetzbares Vorlaufgefäss mit einem Reservoir und einer Durchlaufzone, welche von Permanentmagnetmitteln zur Erzeugung eines, die Durchlaufzone durchdringenden permanent-magnetischen Feldes umgeben ist zum Entspannen des durchlaufenden Wassers durch Magnetisieren.

Durch diese Massnahmen ist es nunmehr möglich, dem normalen Leitungswasser die Eigenschaften von Quellwasser mit hoher magnetischer Wirkung zu vermitteln.

Um das magnetisierte Wasser im Trinkbecher auch für längere Zeit und gegen Umwelteinflüsse zu stabilisieren, ist es von grosser Bedeutung, wenn auch die Wandung des Trinkbechers von weiteren Permanentmagnetmitteln zur Erzeugung eines, den Raumbereich des Trinkbechers durchdringenden permanentmagnetischen Feldes umgeben wird.

Ansich lassen sich für relativ gute Ergebnisse ohne weiteres Ferrit-Magnetringe verwenden, die dann die Durchlaufzone resp. den Trinkbecher umgeben.

Vorzuziehen sind aber Magnetbandstreifen, welche, in mehreren Lagen gewickelt, ein mehrfach stärkeres Magnetfeld erzeugen, wie sich durch Messungen leicht nachweisen lässt.

Diese Wicklungen aus Magnetbandstreifen können dann ein Durchlaufrohr in der Durchlaufzone des Vorlaufgefässes umgeben resp. zwischen einer inneren und einer äusseren Wandung des Trinkbechers angeordnet sein.

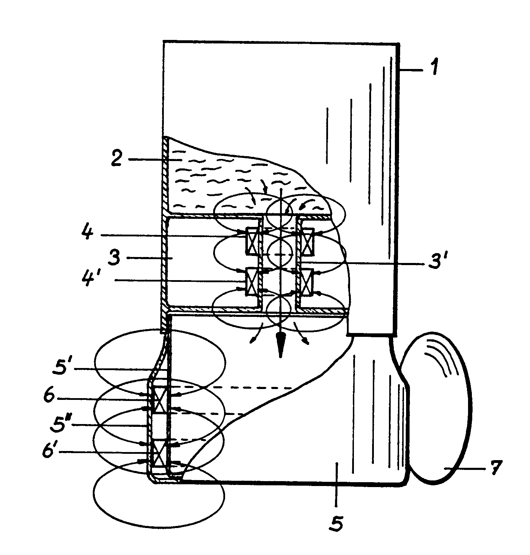

Eine beispielsweise Ausführungsform des Erfindungsgegenstandes ist nachfolgend anhand der Zeichnung, welche eine Vorrichtung zum Magnetisieren von Trinkwasser in einem Längsschnitt zeigt, näher erläutert.

Die dargestellte Vorrichtung zum Magnetisieren von beispielsweise Leitungswasser umfasst ein, auf einen Sammelbehälter 5 aufsetzbares Vorlaufgefäss 1 mit einem Reservoir 2 und einer Durchlaufzone 3, welche von Permanentmagnetmitteln 4, 4' zur Erzeugung eines, die Durchlaufzone 3 durchdringenden permanentmagnetischen Feldes umgeben ist.

Wird nun das Reservoir 2 mit Leitungswasser aufgefüllt, strömt dieses mit einer durch den Durchlaufquerschnitt in der Durchlaufzone bestimmten Strömungsgeschwindigkeit in den Sammelbehälter 5, dessen Volumen natürlich mindestens gleichgross oder grösser ist als jenes des Reservoirs. Hierbei wird das durchlaufende Wasser vom magnetischen Feld, von dem einigen Feldlinien angedeutet sind, durchsetzt und so magnetisiert.

Wie bereits erwähnt, sind hierbei die Permanentmagnetmittel Magnetbandstreifen, die vorzugsweise ein Durchlaufrohr 3' in der Durchlaufzone 3 umgeben, wobei hier die Magnetbandstreifen zwei in Rohrlängsrichtung voneinander distanzierte Mehrlagenwicklungen 4 und 4' bilden.

Um, wie weiter erwähnt, das vom Sammelbehälter 5 aufgenommene magnetisierte Wasser auch für längerer Zeit und gegen entmagnetisierende Einflüsse zu stabilisieren, ist auch die Wandung des Sammelbehälters von weiteren Permanentmagnetmitteln 6,6' zur Erzeugung eines, den Raumbereich des Sammelbehälters durchdringenden permanentmagnetischen Feldes umgeben wird, wie das auch hier durch einige magnetische Feldlinien angedeutet ist.

Diese Permanentmagnetmittel befinden sich zwischen einer inneren Wandung 5' und einer äusseren Wandung 5'' des Sammelbehälters 5, der etwa die Form eines Trinkbechers mit einem Henkel 7 haben kann. Die genannten Permanentmagnetmittel können auch hier wieder Magnetbandstreifen sein, welche die innere Wandung 5 als Mehrlagenwicklungen 6 und 6' umgeben.

Aus dem Vorbeschriebenen ergibt sich somit eine Vorrichtung zum Magnetisieren von Wasser, welche allen vorstehenden Bedingungen bezüglich Wirksamkeit und Handhabung genügt.

## Patentansprüche

1. Trinkbecher, gekennzeichnet durch ein aufsetzbares Vorlaufgefäss (1) mit einem Reservoir (2) und einer Durchlaufzone (3), welche von Permanentmagnetmitteln (4,4') zur Erzeugung eines, die Durchlaufzone (3) durchdringenden permanent-magnetischen Feldes umgeben ist zum Entspannen des durchlaufenden Wassers durch Magnetisieren.

2. Trinkbecher nach Anspruch 1, dadurch gekennzeichnet, dass die Permanentmagnetmittel (4,4') Magnetbandstreifen sind, welche ein Durchlaufrohr (3') in der Durchlaufzone (3) umgeben.

3. Trinkbecher nach Anspruch 2, dadurch gekennzeichnet, dass die Magnetbandstreifen (4,4') zwei in Rohrlängsrichtung voneinander distanzierte Mehrlagenwicklungen bilden.

4. Trinkbecher nach Anspruch 1, dadurch gekennzeichnet, dass dessen Wandung (5') von weiteren Permanentmagnetmitteln (6,6') zur Erzeugung eines, den Raumbereich des Trinkbechers (5) durchdringenden permanentmagnetischen Feldes umgeben ist.

5. Trinkbecher nach Anspruch 4, dadurch gekennzeichnet, dass die Permanentmagnetmittel (6,6') zwischen einer inneren Wandung (5') und einer äusseren Wandung (5'') angeordnet sind.

6. Trinkbecher nach Anspruch 5, dadurch gekennzeichnet, dass die Permanentmagnetmittel (6,6') Magnetbandstreifen sind, welche die innere Wandung (5') als mindestens eine Mehrlagenwicklung umgeben.

## Claims

1. A drinking cup wherein an attachable initial receptacle (1), comprising a reservoir (2) and a through-flow area (3), which is surrounded by permanent-magnet means (4,4') in order to produce a permanent-magnetic field which pervades the through-flow area (3) in order to unstress the water passing through by means of magnetizing.

2. The drinking cup as defined in claim 1 wherein the permanent-magnet means (4,4') are magnetic tape strips which surround a through-flow tube (3') in the through-flow area (3).

3. The drinking cup as defined in claim 2 wherein the magnetic tape strips (4,4') form two multilayer wrappings at a distance from each other in the longitudinal direction of the tube.

4. The drinking cup as defined in claim 1 wherein the wall (5') thereof is surrounded by further permanent-magnet means (6,6') in order to produce a permanent-magnetic field which pervades the volume area of the drinking cup (5).

5. The drinking cup as defined in claim 4 wherein the permanent-magnet means (6,6') are disposed between an inner wall (5') and an outer wall (5'').

6. The drinking cup as defined in claim 5 wherein the permanent-magnet means (6,6') are magnetic tape strips which surround the inner wall (5') as at least one multilayer wrapping.

## Revendications

1. Gobelet caractérisé par le fait qu'il est doté d'un récipient de tête emboîtable (1) comprenant un réservoir (2) et une zone de passage (3) qui est enveloppée d'agents magnétiques permanents (4,4') destinés à produire, dans le but d'atténuer la tension superficielle de l'eau, un champ magnétique permanent traversant la zone de passage (3).

2. Gobelet selon revendication 1, caractérise par le fait que les agents magnétiques permanents (4,4') sont des rubans magnétiques entourant un tube de passage (3') dans la zone de passage (3).

3. Gobelet selon revendication 2, caractérisé par le fait que les rubans mangétiques (4,4') forment deux enroulements multicouches écartés l'un de l'autre dans le sens longitudinal du tube.

4. Gobelet selon revendication 1, caractérisé par le fait que sa paroi (5') est entourée d'agents magnétiques permanents supplémentaires (6,6') afin de produire un champ magnétique permanent capable de traverser l'intérieur du gobelet (5).

5. Gobelet selon revendication 4, caractérisé par le fait que les agents magnétiques permanents (6,6') sont agencés entre une paroi intérieure (5') et une paroi extérieure (5'').

6. Gobelet selon revendication 5, caractérisé par le fait que les agents magnétiques permanents (6,6') sont des rubans magnétiques qui entourent la paroi intérieure (5') en formant au moins un enroulement multicouche.
